# EUROPÄISCHE PATENTANMELDUNG

(11) **EP 0 552 431 A1**
(43) Veröffentlichungstag der Anmeldung: **28.07.1993**
(21) Anmeldenummer: 92118924.7
(22) Anmeldetag: 05.11.1992
(51) Int. Cl.: G03B 17/08, G03B 15/00, G03B 11/00

(54) **Vorrichtung für Kameras für in situ Aufnahmen in Wasser**

(30) Priorität: 20.12.1991 DE 4142223
(71) Anmelder: Mayer, Claus, D-22949 Ammersbek (DE)
(72) Erfinder: Mayer, Claus, D-22949 Ammersbek (DE)
(74) Vertreter: Niedmers, Ole, Dipl.-Phys.

(57) **Zusammenfassung**

Es wird eine Vorrichtung (10) für Kameras für in situ Aufnahmen im Wasser vorgeschlagen. Diese weist ein zu einem zu beobachtenden Objekt wenigstens lichtoffenes (14) Gehäuse (11) auf und eine im wesentlichen zur Gehäuseöffnung (14) gegenüberliegende Öffnung (15) zur Aufnahme der Kamera, wobei das Gehäuse (11) wenigstens einen Einlaß (16) für die Zufuhr von Wasser aufweist.

## Beschreibung

Die Erfindung betrifft eine Vorrichtung für Kameras für in situ Aufnahmen im Wasser.

Bedingt durch eine natürliche Trübung infolge in Wasser gelöster bzw. schwebender Sedimente, wie man es beispielsweise in tidenabhängigen Flußgewässern trifft, aber auch bedingt durch vielfache Formen der Verschmutzung von See-, Fluß- und Meeresgewässern, ist es vielfach nur mit extrem großem Aufwand möglich, im Unterwasserbereich fotografische Aufnahmen oder Filmaufnahmen mit ausreichender Schärfe, beispielsweise von Spundwänden, Schiffsböden, Wrackteilen oder sonstigen Objekten zu machen, die unter Wasser liegen. Diese sehr großen Schwierigkeiten beruhen im wesentlichen darauf, daß die im Wasser gelösten bzw. schwebenden Partikel eine solche Dichte im Wasservolumen haben, daß selbst bei sehr großer Nähe zum aufzunehmenden Objekt, die Aufnahmen derart unscharf sind, daß sie für eine tatsächliche Aussage von den im Wasser anzutreffenden Verhältnissen des betreffenden Objekts wenig bis gar nichts beitragen können. Diese bei Aufnahmen im Unterwasserbereich anzutreffende sehr nachteilige Unzulässigkeit gilt sowohl für fotografische Filmaufnahmen als auch für Videoaufnahmen gleichermaßen.

Man hat dieses Problem, wie schon angedeutet, dadurch zu lösen versucht, daß man bei der in situ Aufnahme im Wasser den aufzunehmenden Bereich des Objekts beispielsweise auf aufwendige Weise umhüllte und daraus das Wasser durch Pumpen entfernte und dann die notwendigen Aufnahmen im wasserfreien Raum innerhalb der Umhüllung durchführte. Diese Methode ist zunehmend aufwendiger, je tiefer der zu beobachtende Ort im Wasser liegt, wobei aber unterhalb einer bestimmten Tiefe im Wasser durch die Druckerhöhung bedingt, diese bekannte Methode zunehmend unattraktiver wird (wegen größer werdender technischer Probleme).

Es ist Aufgabe der vorliegenden Erfindung, eine Vorrichtung für Kameras für in situ Aufnahmen im Wasser zu schaffen, die an Unterwasserkameras, aber auch an normale Kameras, die für den Unterwasserbereich hergerichtet sind, auf einfache Weise anbaubar ist, mit der exakt scharfe Aufnahmen des zu beobachtenden Objekts gemacht werden können, die sehr einfach im Aufbau ist und darüber hinaus in nahezu beliebiger Wassertiefe verwendet werden kann, die einfach und kostengünstig herstellbar ist und sowohl im kommerziellen auch im privaten Bereich Verwendung finden kann.

Gelöst wird die Aufgabe gemäß der Erfindung durch ein zu einem zu beobachtenden Objekt wenigstens lichtoffenes Gehäuse und einer im wesentlichen zur Gehäuseöffnung gegenüberliegenden Öffnung zur Aufnahme der Kamera, wobei das Gehäuse einen Einlaß für die Zufuhr von Wasser aufweist.

Der wesentliche Vorteil der Erfindung besteht darin, daß bei prinzipiell unveränderter Handhabung der Kamera das Gehäuse lediglich im Bereich des Objektivs der Kamera verbunden zu werden braucht und über den Einlaß Frischwasser in das Gehäuse von außen, beispielsweise über eine gesonderte Schlauchleitung zur Wasseroberfläche oder von einem Reinwasservorrat im Wasser, in das Gehäuseinnere hineingeführt zu werden braucht, so daß sich der Gehäuseinnenraum unmittelbar vor dem Objektiv der Kamera mit Reinwasser anfüllt und dabei, wenn es unter einem geringfügig höheren Druck als das Umgebungswasser steht, das im Gehäuseinnenraum befindliche verschmutzte bzw. getrübte Wasser verdrängt. Je nach Gehäusegröße können unterschiedliche Entfernungen zum zu beobachtenden Objekt unter Wasser eingenommen werden, wobei die laterale Weite der Gehäuseöffnung in Verbindung mit dem gewählten Objektiv der Kamera ebenfalls ein Maß für die beobachtbare Fläche des Objekts ist.

Das Gehäuse selbst kann im Prinzip eine beliebig geeignete Form aufweisen, es hat sich jedoch als vorteilhaft herausgestellt, daß das Gehäuse im wesentlichen mit einer kegelstupmpfförmigen/oder pyramidenstumpfförmigen Form auszubilden, wobei die zum zu beobachtenden Objekt weisende Gehäuseöffnung an der Basis des Kegelstumpfes/oder des Pyramidenstumpfes angeordnet ist. Beide Arten der Ausbildung des Gehäuses lassen sich auf verhältnismäßig einfache Weise herstellen, wobei durch die Wahl dieser Form und geeignet groß gewählten Winkel zwischen der durch das Gehäuse von der einen Öffnung zur anderen Öffnung hindurchgehenden gedachten Gehäuseachse zur Seitenfläche des Gehäuses eine ausreichend große Fläche auf dem zu beobachtenden Objekt erfaßt werden kann.

Um die Zufuhr von Reinwasser in das Gehäuseinnere hinein möglichst gering bei voller Aufrechterhaltung des vorangehend beschriebenen vorteilhaften Effekts zu erreichen, ist es vorteilhaft, die zum zu beobachtenden Objekt weisende Gehäuseöffnung durch ein diese im wesentlichen abdeckendes lichttransparentes flächenförmiges Element abzudecken, und dabei vorteilhafterweise im Randbereich zwischen dem flächenförmigen Element und der Gehäuseinnenwand Spalte freizulassen, durch die das Reinwasser aus dem Gehäuseinnenraum heraustreten kann. Dadurch wird eine Zurückmischung mit dem Umgebungswasser vermieden, da, bedingt durch den etwas höheren Innendruck des Reinwassers im Gehäuseinnenraum das Umgebungswasser durch die schmalen Durchtrittsbereiche am Rand des flächenförmigen Elements nicht wieder in das Gehäuseinnere eintreten kann.

Bei einer anderen vorteilhaften Ausgestaltung der Vorrichtung ist das Element wenigstens in seinem Randbereich mit einer Mehrzahl von Löchern versehen, wobei das Element ansonsten dichtend in der Gehäuseöffnung aufgenommen ist. Das Reinwasser kann jetzt, auf gleiche Weise wie vorangehend geschildert, aus dem Gehäuseinnenraum durch die Löcher austreten. Durch diese Art der Ausgestaltung kann die benötigte Menge an Reinwasser zur Sicherstellung einwandfreier scharfer Aufnahmen ggf. noch weiter reduziert werden. Das Element kann auch über seine ganze Fläche oder bereichsweise verteilt mit Löchern versehen sein, um einen schnellen Abfluß des sich im Innenraum befindlichen Wassers zu ermöglichen. Die der zum zu beobachtenden Objekt weisende Gehäuseöffnung gegenüberliegende Öffnung zur Aufnahme der Kamera wird vorteilhafterweise durch einen zylinderförmig ausgebildeten Tubus begrenzt, d. h. der Tubus ist auf dem Gehäuse auf der dort ausgebildeten Öffnung aufgesetzt. Die zylinderförmige Ausbildung des das Gehäuse gewissermaßen verlängernden Tubus ist aus dem Grunde sehr sinnvoll, weil die vom Gehäuse wegweisende Tubusöffnung einen kreisförmigen Querschnitt aufweist und somit eine einfache Möglichkeit der Befestigung der Kamera bzw. des Objektivs der Kamera an der Vorrichtung bietet. Ein weiterer Vorteil liegt auch darin, daß aufgrund dieses Tubus eine schnelle Anpassung an unterschiedliche Kameratypen bzw. Objektive unterschiedlicher Kameras durch geeignete Wahl von Adapterelementen möglich ist.

Prinzipiell kann der Einlaß für die Zufuhr von Reinwasser in den Gehäuseinnenraum an beliebiger geeigneter Stelle im Gehäuse vorgesehen sein. Es hat sich aber unter dem Gesichtspunkt einer möglichst schnellen Entleerung des Gehäuseinnenraums von verschmutztem oder trübem Wasser bei in situ Aufnahmen als vorteilhaft erwiesen, den Einlaß im Tubus und dort im wesentlichen im unteren Bereich anzuordnen, d. h. das eigentliche Gehäuse selbst wird durch diese Wahl der Anordnung des Einlasses schnell vom verschmutzten Wasser bzw. vom trüben Wasser entleert.

Wie schon angedeutet, ist vorzugsweise in die Öffnung zur Aufnahme der Kamera eine Kamerahalterung gegenüber der Tubusinnenwand dichtend einbringbar, wobei die Kamera selbst in der Kamerahalterung befestigbar ist. Ggf. kann die Kamerahalterung somit schon vor dem Einsatz im Wasser mit der Kamerahalterung verbunden werden, wobei dann die mit der Kamerahalterung verbundene Kamera lediglich in den Tubus hineingeführt zu werden braucht, wo die Kamerahalterung dichtend aufgenommen wird.

Vorteilhafterweise umfaßt die Kamerahalterung ein im wesentlichen zylindrisch ausgebildetes Rohr, in dem wenigstens der Objektivbereich der Kamera aufnehmbar und befestigbar ist.

Die Dichtung wird dabei vorteilhafterweise durch einen O-Ring, der in einer Nut, die in einem die Kamerahalterung umgebenden Ring ausgebildet ist, aufgenommen, wobei grundsätzlich neben der vorteilhaften Ausbildung der Dichtung in Form eines O-Ringes auch andere vorteilhafte Dichtelemente, beispielsweise solche, die eine oder mehrere Dichtlippen aufweisen, möglich sind.

Um bei in situ Aufnahmen im Wasser das zu beobachtende Objekt zu beleuchten, kann grundsätzlich eine Beleuchtung von außen erfolgen, wobei dann aber ein Minimalabstand zum zu beobachtenden Objekt eingehalten werden muß, damit das Licht seitlich an der Vorrichtung vorbei das Objekt beleuchten kann. Es ist auch möglich, wenn man beispielsweise das Gehäuse außen aus lichttransparentem Werkstoff ausbildet, das Objekt durch das Gehäuse hindurch zu beleuchten. Vorteilhaft ist es jedoch, im Gehäuseinnenraum wenigstens ein Beleuchtungsmittel anzuordnen, um direkt vom Innenraum her das Objekt geeignet anstrahlen zu können.

Dabei ist es vorteilhaft, das Beleuchtungsmittel unmittelbar an der Innenwand des Gehäuses anzuordnen, wobei es auch vorteilhaft und sinnvoll sein kann, das Beleuchtungsmittel von außen noch in bezug auf seine Richtung zum zu beobachtenden Objekt dreh- schwenkbar auszubilden, um ein optimales Bescheinen des Objektes zu erreichen.

Schließlich ist es zur Erleichterung der Handhabung der Vorrichtung in Verbindung mit der Kamera bei der Ausführung der in situ Aufnahme im Wasser vorteilhaft, das Gehäuse mit einem Handgriff zu versehen, so daß ggf. dadurch das unmittelbare Halten der Kamera selbst entbehrlich wird, da über diesen Handgriff die Vorrichtung und die mit der Vorrichtung auf vorbeschriebene Weise verbundene Kamera gehalten bzw. gehandhabt werden kann.

Die Erfindung wird nun unter Bezugnahme auf die nachfolgenden schematischen Zeichnungen anhand eines Ausführungsbeispieles eingehend beschrieben. Darin zeigen:
- Fig. 1: in perspektivischer Darstellung eine Vorrichtung im Schnitt,
- Fig. 2: eine Draufsicht auf die in Fig. 1 dargestellte Vorrichtung im Schnitt,
- Fig. 3 a: eine Draufsicht auf das flächenförmige Element mit in seinem Randbereich angeordneten Löchern,

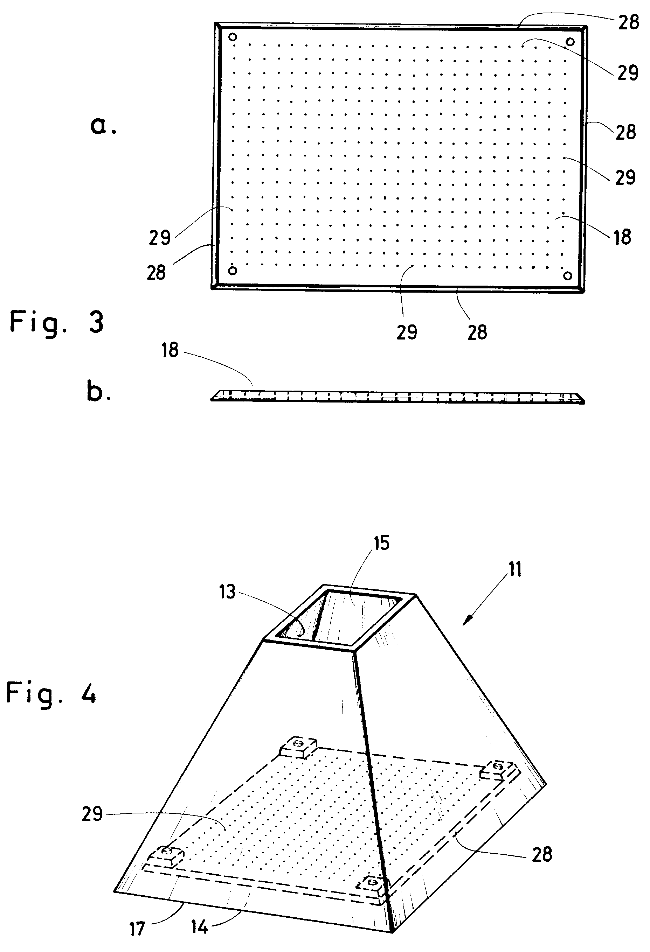

- Fig. 3 b: eine Seitenansicht des in Fig. 3 dargestellten Elementes,
- Fig. 4: in perspektivischer Darstellung lediglich das Gehäuse mit in die eine Gehäuseöffnung eingesetztem Element gemäß Fig. 3 a, b,

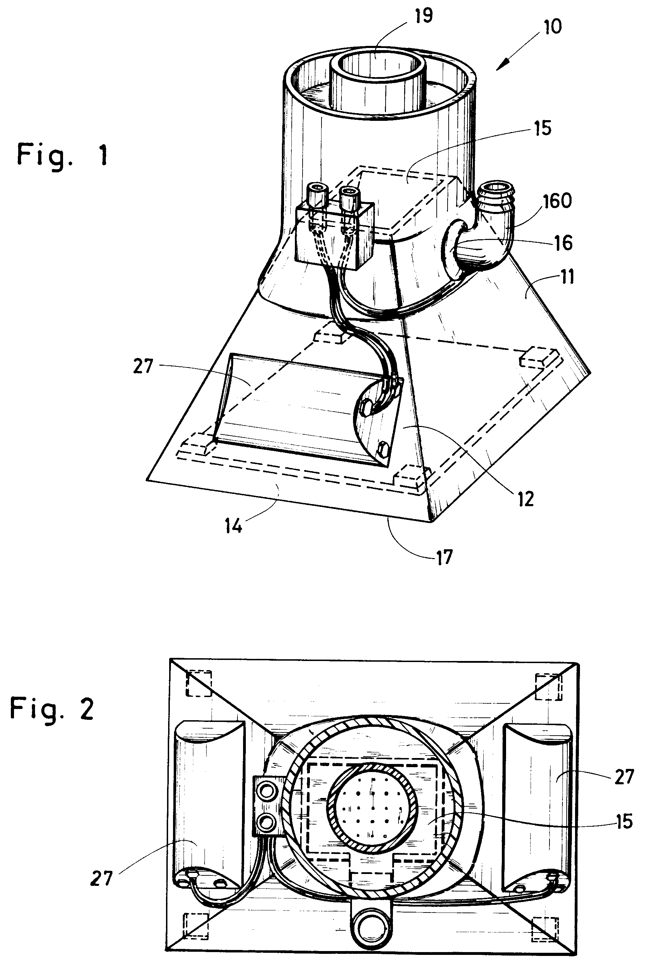

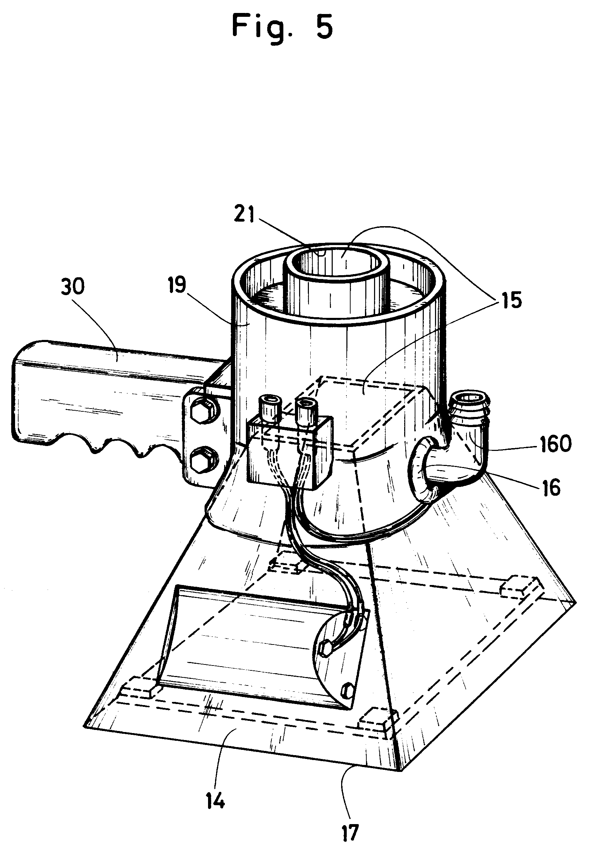

- Fig. 5: in perspektivischer Darstellung im Schnitt eine Vorrichtung gemäß Fig. 1 mit Handgriff und

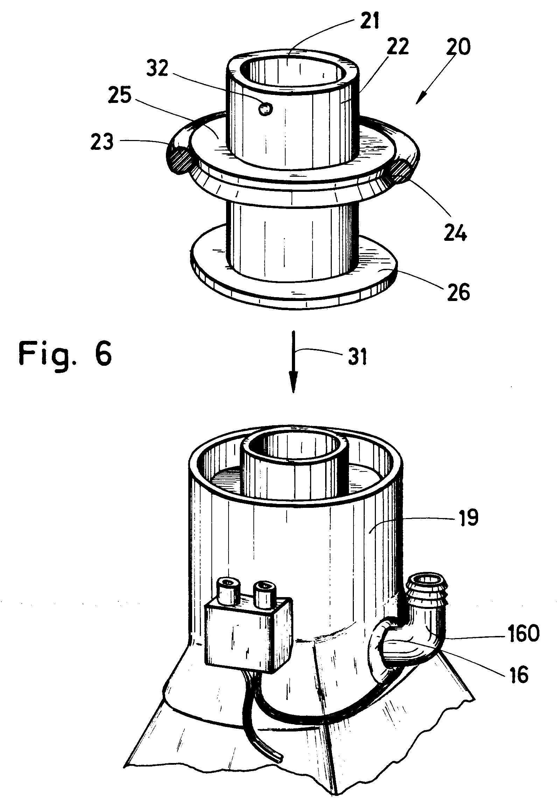

- Fig. 6: eine Kamerahalterung sowie den Tubus gemäß Fig. 1 in perspektivischer Darstellung unter Weglassung der übrigen Gehäuseteile, wobei die Kamerahalterung in den Tubus in Pfeilrichtung einbringbar ist.

Die Vorrichtung 10 besteht im wesentlichen aus einem Gehäuse 11, das bei der in den Fig. dargestellten Ausführungsform pyramidenstumpfförmig ausgebildet ist. Das Gehäuse 11 weist eine zu seiner Basis 17 gerichtete Gehäuseöffnung 14 auf und eine zu dieser Gehäuseöffnung 14 gegenüberliegende Öffnung 15. Auf die Öffnung 15 ist ein zylinderförmiger Tubus 19 gestülpt, der auf dem Gehäuse 11 auf geeignete Weise abgedichtet befestigt ist.

Die Gehäuseöffnung 14 ist, vgl. insbesondere die Fig. 3 a, b, 4, mit einem lichttransparenten flächenförmigen Element 18 derart verschlossen, daß in den Randbereichen zwischen Gehäuseinnenwand 13 und den Rändern des flächenförmigen Elementes 18 ein geringfügiger Spalt gebildet wird, oder aber das lichttransparente flächenförmige Element 18 deckt die Gehäuseöffnung 14 hermetisch ab, wobei in diesem Falle dann das Element 18 in seinem Randbereich 28 mit einer Mehrzahl von Löchern 29 versehen ist.

Im unteren Bereich des Tubus 19 ist ein Einlaß 16 vorgesehen, der mit einem Rohrstutzen 160 verbunden ist. Der Rohrstutzen 160 wird über einen hier nicht dargestellten Schlauch oder eine hier nicht dargestellte Rohrverbindung mit einem Reinwasservorrat, der sich entweder im Wasser vor Ort selbst befinden kann oder aber im Oberwasserbereich auf einer Plattform oder auf einem Schiff angeordnet ist, verbunden.

Bei der in den Fig. dargestellten Ausführungsform der Vorrichtung 10 wird die Öffnung 15 zur Aufnahme der Kamera selbst durch die obere Öffnung 15 im Tubus 19 gebildet, da das eigentliche Gehäuse 11 und der Tubus 19 gewissermaßen das Gesamtgehäuse bilden. In die Öffnung 15 ist eine Kamerahalterung 20 einbringbar, die in Fig. 6 verdeutlichend dargestellt ist. Die Kamerahalterung 20 besteht im wesentlichen aus einem zylindrischen Rohr 22, einem lichttransparentem Deckel 26, der am unteren Ende des Rohres 22 dieses verschließend ausgebildet ist, und aus einem die Kamerahalterung 20 umgebenden Ring 25. Der Ring 25 weist eine umlaufende Nut 24 auf, in die eine umlaufende Dichtung, beispielsweise in Form eines O-Ringes 23, einbringbar und aufnehmbar sein kann. Es ist aber auch möglich, beliebige andere geeignete Dichtelemente anstelle des O-Ringes 23 vorzusehen. Das Rohr 22 dient der eigentlichen Aufnahme der Kamera bzw. des Objektivbereichs der Kamera. Bei in das Rohr 22 eingebrachter Kamera kann das betreffende dort eingebrachte Kamerateil durch Befestigungsmittel am Rohr 22 befestigt werden, was schematisch durch die Bezugsziffer 32 dargestellt ist.

Wie aus den Fig. ebenfalls ersichtlich ist, sind im Gehäuseinnenraum 12 an der Gehäuseinnenwand 13 zwei Beleuchtungsmittel 27 angeordnet, die über hier nicht weiter dargestellte Verbindungsmittel bzw. elektrische Leitungen mit einer Spanngungsquelle verbindbar sind. Die Beleuchtungsmittel 27 können auf hier nicht gesondert dargestellte Weise derart an der Gehäuseinnenwand 13 bzw. im Gehäuseinneraum 12 befestigt sein, daß sie vom Äußeren der Vorrichtung 10 aus in ihrer Richtung einstellbar sind, um ein optimiertes Ausleuchten des zu beobachtende Objekt zu ermöglichen. Ferner ist das Gehäuse 11 mit einem Handgriff 30 versehen, so daß über die Vorrichtung 10 bzw. über das Gehäuse 11 die mit der Vorrichtung 10 verbundene, hier nicht dargestellte Kamera einhändig gehandhabt werden kann.

Zur bestimmungsgemäßen Funktion der Vorrichtung 10 wird die Kamera über die Kamerahalterung 20 in Richtung des Pfeiles 31 in den Innenraum des Tubus 19 hineingeschoben, wobei sich die Kamerahalterung 20 dichtend an die Tubusinnenwand 21 anlegt. Nachfolgend wird über die Rohrleitung über den Rohrstutzen 60, nachdem die Vorrichtung 10 mit Kamera an den entsprechenden Ort im Wasser gebracht worden ist, mit Reinwasser versorgt, das gegenüber dem Umgebungsdruck des verunreinigten bzw. trüben Wassers einen geringfügig höheren Druck aufweist. Dadurch wird das sich im Gehäuseinnenraum 12 befindliche verschmutzte bzw. trübe Wasser allmählich aus dem Gehäuseinnenraum 12 entfernt, indem es durch die Löcher 29 nach außen tritt oder aber durch den oben erwähnten schmalen Spalt. Nach kurzer Zeit ist der gesamte Gehäuseinnenraum 12 von verschmutztem bzw. trübem Wasser befreit und es kann die Vorrichtung 10 in eine unmittelbare Nähe des zu beobachtenden Objekts gebracht werden oder aber direkt auf das Objekt aufgelegt werden bzw. in Kontakt mit dem Objekt gebracht werden. Die Beleuchtungsmittel 27 beleuchten dabei das Objekt auf optimale Weise und der Aufnahmevorgang (fotografische Aufnahme, Filmaufnahme, Videoaufnahme) kann durchgeführt werden.

Die mit der Vorrichtung 10 erhaltbaren Aufnahmen haben in unmittelbarem Einsatz in Tidengewässern aber auch im Bereich von Seen und im Meeresbereich hervorragende Aufnahmen erbracht, wie sie bisher noch niemals erreicht worden sind.

### Bezuqszeichenliste

- 10: Vorrichtung
- 11: Gehäuse
- 12: Gehäuseinnenraum
- 13: Gehäuseinnenwand
- 14: Gehäuseöffnung
- 15: Öffnung
- 16: Einlaß
- 160: Rohrstutzen
- 17: Basis
- 18: flächenförmiges Element
- 19: Tubus
- 20: Kamerahalterung
- 21: Tubusinnenwand
- 22: Rohr
- 23: O-Ring
- 24: Nut
- 25: Ring
- 26: Deckel
- 27: Beleuchtungsmittel
- 28: Randbereich
- 29: Loch
- 30: Handgriff
- 31: Pfeil
- 32: Betätigungsmittel

## Patentansprüche

1. Vorrichtung für Kameras für in situ Aufnahmen im Wasser, gekennzeichnet durch ein zu einem zu beobachtenden Objekt wenigstens lichtoffenes (14) Gehäuse (11) und eine im wesentlichen zur Gehäuseöffnung (14) gegenüberliegenden Öffnung (15) zur Aufnahme der Kamera, wobei das Gehäuse (11) einen Einlaß (16) für die Zufuhr von Wasser aufweist.

2. Vorrichtung nach Anspruch 1, dadurch gekennzeichnet, daß das Gehäuse (11) eine im wesentlichen kegelstumpfförmige/oder pyramidenstumpfförmige Form aufweist, wobei die zum zu beobachtenden Objekt weisende Gehäuseöffnung (14) an der Basis (17) des Kegelstumpfes/oder des Pyramidenstumpfes angeordnet ist.

3. Vorrichtung nach einem oder beiden der Ansprüche 1 oder 2, dadurch gekennzeichnet, daß die zum zu beobachtenden Objekt weisende Gehäuseöffnung (14) durch ein diese im wesentlichen abdeckendes lichttransparentes flächenförmiges Element (18) abgedeckt ist.

4. Vorrichtung nach Anspruch 3, dadurch gekennzeichnet, daß das Element (18) wenigstens in seinem Randbereich (28) mit einer Mehrzahl von Löchern (29) versehen ist.

5. Vorrichtung nach einem oder mehreren der Ansprüche 1 bis 4, dadurch gekennzeichnet, daß die Öffnung (15) zur Aufnahme der Kamera durch einen zylinderförmigen Tubus (19) ausgebildet ist, wobei der Tubus (19) auf dem Gehäuse (11) angeordnet ist.

6. Vorrichtung nach Anspruch 5, dadurch gekennzeichnet, daß der Einlaß (16) im Tubus (19) im wesentlichen im unteren Bereich angeordnet ist.

7. Vorrichtung nach einem oder beiden der Ansprüche 5 oder 6, dadurch gekennzeichnet, daß in die Öffnung (15) zur Aufnahme der Kamera eine Kamerahalterung (20) gegenüber der Tubusinnenwand (21) dichtend einbringbar ist.

8. Vorrichtung nach Anspruch 7, dadurch gekennzeichnet, daß die Kamerahalterung (20) ein im wesentlichen zylindrisch ausgebildetes Rohr (22) umfaßt, in dem wenigstens der Objektivbereich der Kamera aufnehmbar ist.

9. Vorrichtung nach einem oder beiden der Ansprüche 7 oder 8, dadurch gekennzeichnet, daß die Dichtung durch einen O-Ring gebildet wird, der in einer Nut (24), die in einem die Kamerahalterung umgebenden Ring (25) ausgebildet ist, aufgenommen wird.

10. Vorrichtung nach einem oder mehreren der Ansprüche 1 bis 9, dadurch gekennzeichnet, daß im Gehäuseinnenraum (13) wenigstens ein Beleuchtungsmittel (27) angeordnet ist.

11. Vorrichtung nach Anspruch 10, dadurch gekennzeichnet, daß das Beleuchtungsmittel (27) unmittelbar an der Innenwand (13) des Gehäuses (11) angeordnet ist.
